# EUROPEAN PATENT APPLICATION

(11) **EP 3 522 640 A1**
(43) Date of publication of application: **07.08.2019**
(21) Application number: 17856403.5
(22) Date of filing: 29.09.2017
(51) Int. Cl.: H04W 72/04, H04B 7/06, H04L 27/26, H04W 16/28

(54) **USER TERMINAL AND WIRELESS COMMUNICATION METHOD**

(30) Priority: 29.09.2016 JP 2016192333
(71) Applicant: NTT DOCOMO, INC., Chiyoda-ku Tokyo 100-6150 (JP)
(72) Inventor: MOROGA, Hideyuki, Tokyo 100-6150 (JP); TAKEDA, Kazuaki, Tokyo 100-6150 (JP); NAGATA, Satoshi, Tokyo 100-6150 (JP); TAKEDA, Kazuki, Tokyo 100-6150 (JP)
(74) Representative: Hoffmann Eitle
(86) International application number: PCT/JP2017/035384
(87) International publication number: WO 2018/062454

(57) **Abstract**

The present invention is designed so that downlink and/or uplink control information are transmitted and received properly in communication in which beamforming is used. A user terminal has a receiving section that receives a control channel candidate in a control channel field where a plurality of control channel candidates are able to be mapped in one subframe, and a control section that exerts control to decode control information based on the control channel candidate received in the receiving section. In the control channel field, different beams are associated with different symbols, and the control channel candidate is mapped to at least one of the different symbols.

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted to provide wide bands and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "NR (New Radio)," "NX (New radio access)," "FX (Future generation radio access)," "LTE Rel. 13," "LTE Rel. 14," "LTE Rel. 15" or later versions) are under study.

In LTE Rel. 10/11, carrier aggregation (CA) to integrate multiple carriers (component carriers (CCs), cells, etc.) is introduced in order to provide wide bands. Every component carrier is configured by using the system bandwidth of LTE Rel. 8 as one unit. In addition, in CA, multiple CCs under the same radio base station (eNB (eNodeB)) are configured in a user terminal (UE (User Equipment)).

Also, in LTE Rel. 12, dual connectivity (DC), in which multiple cell groups (CGs) that are formed by different radio base stations are configured in a user terminal, is also introduced. Every cell group is comprised of at least one cell (CC, cell, etc.). In DC, multiple CCs of different radio base stations are integrated, so that DC is also referred to as "inter-base-station CA (inter-eNB CA)."

In existing LTE systems (for example, LTE Rels. 8 to 13), downlink (DL) and/or uplink (UL) communication are carried out using 1-ms transmission time intervals (TTIs). This 1-ms TTI is the time unit for transmitting one channel-encoded data packet, and serves as the unit of processing in, for example, scheduling, link adaptation, retransmission control (HARQ-ACK (Hybrid Automatic Repeat reQuest-ACKnowledgement)) and so on. A TTI of 1 ms is also referred to as a "subframe," a "subframe duration" and so forth.

### Citation List

### Non-Patent Literature

Non-Patent Literature 1: 3GPP TS 36.300 Rel. 8 "Evolved Universal Terrestrial Radio Access (E-UTRA) and Evolved Universal Terrestrial Radio Access Network (E-UTRAN); Overall Description; Stage 2"

### Summary of Invention

### Technical Problem

Envisaging 5G, the use of very high carrier frequencies such as 100 GHz, for example, is under study, and application of beamforming to high frequency bands is also under study. However, unless the downlink/uplink control signal configurations for use for transmitting downlink and/or uplink control information are made to be suitable for beamforming, it is not possible to achieve desired effects, such as diversity effect, for example.

The present invention has been made in view of the above, and it is therefore an object of the present invention to provide a user terminal and a radio communication method, whereby downlink and/or uplink control information can be transmitted and/or received properly, in communication in which beamforming is used.

### Solution to Problem

According to an embodiment in the present specification, a user terminal has a receiving section that receives a control channel candidate in a control channel field where a plurality of control channel candidates are able to be mapped in one subframe, and a control section that exerts control to decode control information based on the control channel candidate received in the receiving section, wherein, in the control channel field, different beams are associated with different symbols, and the control channel candidate is mapped to at least one of the different symbols.

### Advantageous Effects of Invention

According to the present invention, downlink and/or uplink control information can be transmitted and/or received properly.

### Brief Description of Drawings

FIG. 1 is a diagram to explain how the use of a high frequency band increases the number of symbols in one subframe;
FIG. 2A is a diagram to explain coverage when beamforming is used, and FIG. 2B is a diagram to explain coverage when beamforming is not used;
FIG. 3 is a diagram to explain mapping of control channel candidates according to embodiment 1 of the present invention;
FIG. 4 is a diagram to illustrate an example of mapping of control channel candidates according to embodiment 1;
FIG. 5 is a diagram to illustrate an example of mapping of control channel candidates according to embodiment 1;
FIG. 6 is a diagram to explain mapping of control channel candidates according to embodiment 2 of the present invention;
FIG. 7 is a diagram to illustrate an example of mapping of control channel candidates according to embodiment 2;
FIGs. 8A and 8B are diagrams to explain configurations of control signals in the uplink/downlink according to one embodiment of the present invention;
FIGs. 9A and 9B are diagrams to explain methods of reporting control channel fields according to one embodiment;
FIG. 10 is a diagram to explain the method of transmitting demodulation reference signals, according to one embodiment;
FIG. 11 is a diagram to explain the method of transmitting demodulation reference signals, according to one embodiment;
FIG. 12 is a diagram to illustrate an exemplary schematic structure of a radio communication system according to an embodiment of the present invention;
FIG. 13 is a diagram to illustrate an exemplary overall structure of a radio base station according to the present embodiment;
FIG. 14 is a diagram to illustrate an exemplary functional structure of a radio base station according to the present embodiment;
FIG. 15 is a diagram to illustrate an exemplary overall structure of a user terminal according to the present embodiment;
FIG. 16 is a diagram to illustrate an exemplary functional structure of a user terminal according to the present embodiment; and
FIG. 17 is a diagram to illustrate an exemplary hardware structure of a radio base station and a user terminal according to the present embodiment.

### Description of Embodiments

In existing LTE systems, the user terminal communicates in the DL and/or the UL by using TTIs that are 1 ms long in time. A TTI like this is also referred to as a "normal TTI," a "TTI," a "subframe," a "long TTI," a "normal subframe," a "long subframe," a "legacy TTI" and so on, and is comprised of two slots. A cyclic prefix (CP) is appended to each symbol in normal TTIs. Also, when a normal CP (for example, 4.76 µs) is appended to every symbol, a normal TTI is comprised of fourteen symbols (seven symbols per slot). Note that a TTI that is shorter than in existing LTE systems (for example, a TTI less than 1 ms) may be referred to as a "shortened TTI," a "short TTI" and so on.

Meanwhile, future radio communication systems (for example, LTE Rel. 14 or 15, 5G, NR, etc.) are expected to accommodate various kinds of services, such as high speed and large capacity communication (massive connection (mMTC (massive MTC)) from devices (user terminals) for machine-to-machine communication (M2M) such as eMBB, IoT and MTC), low latency and high reliability communication (URLLC (Ultra-Reliable and Low Latency Communication)) and so on, based on a single framework. URLLC is required to provide a higher latency-reducing effect than eMBB and mMTC.

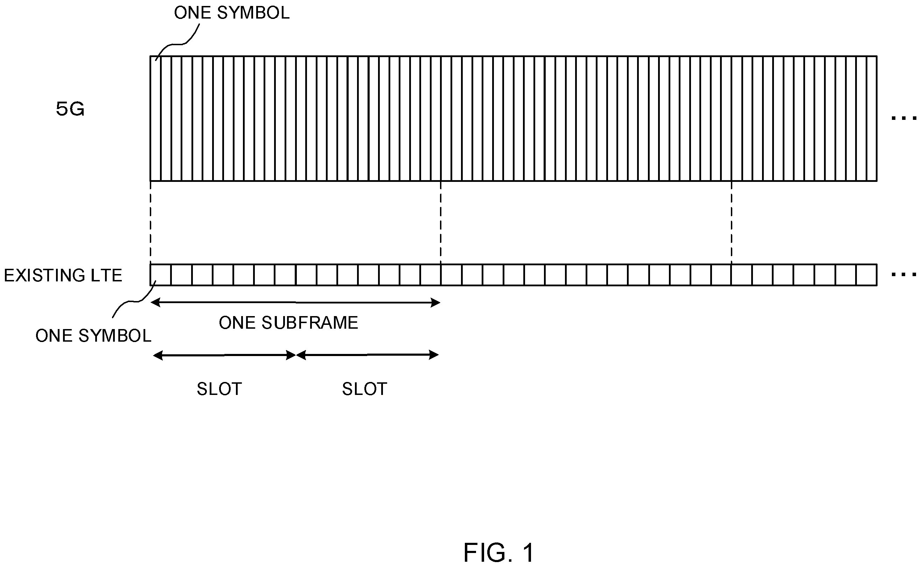

Therefore, research is underway to use high frequency bands, where wide bands are easier to reserve, in addition to existing frequency bands. For example, if subcarrier spacing in multi-carrier communication such as OFDM is expanded by using a high frequency band, this might in turn shorten the duration of symbols, and the number of symbols per subframe may have to be increased (see FIG. 1). Likewise, in the event of SC communication (DFT-spread OFDM communication), too, broadbandization by way of using a high frequency band results in shortening the duration of symbols, and therefore the number of symbols per subframe may be increased.

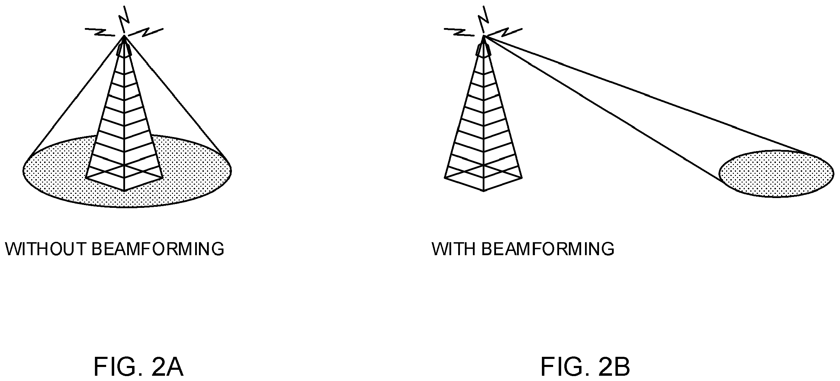

Apart from these, coverage may be expanded by introducing beamforming in high frequency bands. For example, as illustrated in FIG. 2A, when beamforming is not used, signals that are transmitted from a transmission point (a radio base station, a user terminal, etc.) are confined within a certain coverage around the transmission point. On the other hand, when beamforming is used, signals are transmitted from a transmission point with adjusted amplitudes and/or phases, and so these are signals having directivity. Therefore, as illustrated in FIG. 2B, limited areas that are located far from transmission points can constitute coverage, compared to the case beamforming is not used.

However, how to transmit and/or receive downlink and/or uplink control information when beamforming is used in high frequency bands is still under study, and therefore there is a demand for providing control signal configurations (for example, control channel candidates) that are suitable for beamforming, in the downlink/uplink where transmission takes place.

The present inventors have paid attention to the fact that the number of symbols in one subframe increases when high frequency bands are used, and that beamforming is useful in high frequency bands, and come up with the idea of using different beams in different symbols.

Note that, to "use beams (to assign beams, to associate beams, to configure beams, and so forth)" as used herein may include processing signals mapped to symbols based on transmitting weights or receiving weights. Furthermore, using beamforming, assigning specific amplitudes and/or phases, or directivities, to transmitting signals, or receiving signals in specific amplitudes and/or phases, or directivities, assigned to these signals, may be covered in the definition. In addition, precoding is used when signals are transmitted and/or received. For example, codebook-based precoding weights can be used.

Now, embodiments of the present invention will be described below in detail with reference to the accompanying drawings. Cases will be assumed below where, when the number of symbols per subframe increases, a plurality of symbols becomes available for a control channel (resources for transmitting control information). Also, although multiple control channel candidates are allocated to time-frequency resources, these control channel candidates (DCI (Downlink Control Information) candidates) that are allocated may be mapped to search space resources.

### (Embodiment 1)

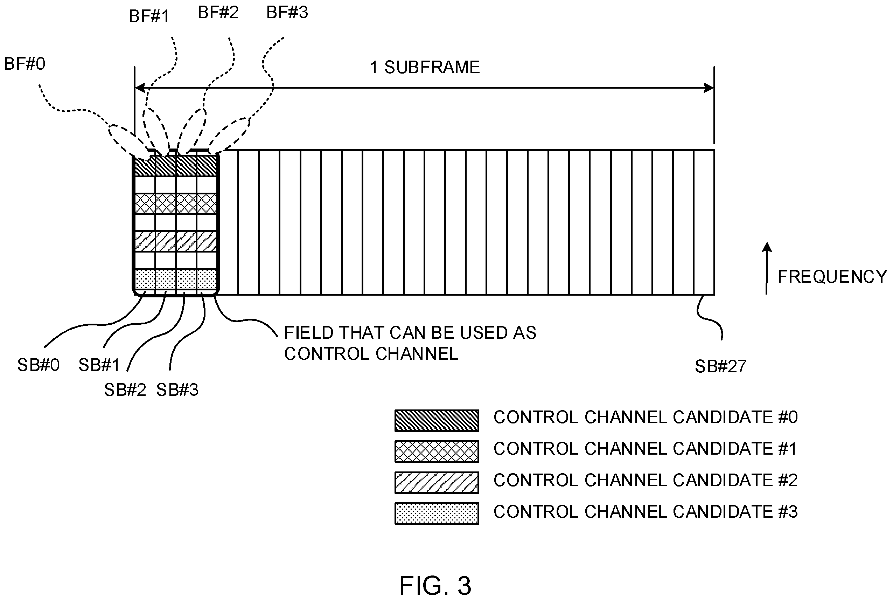

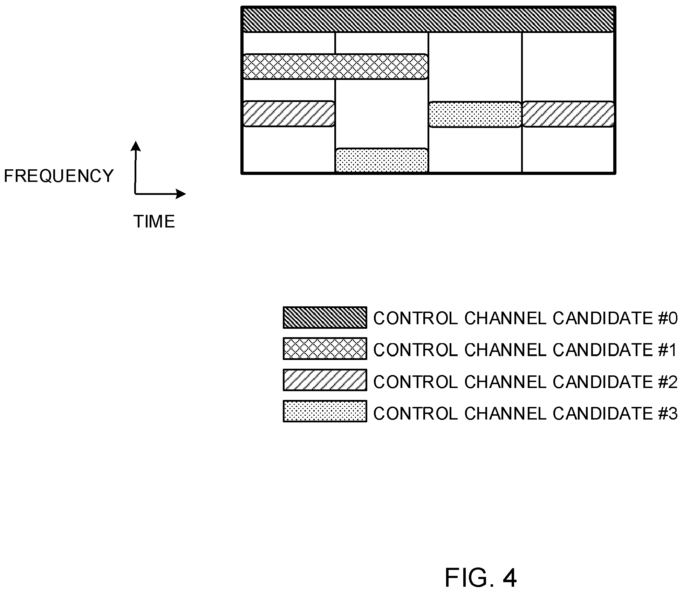

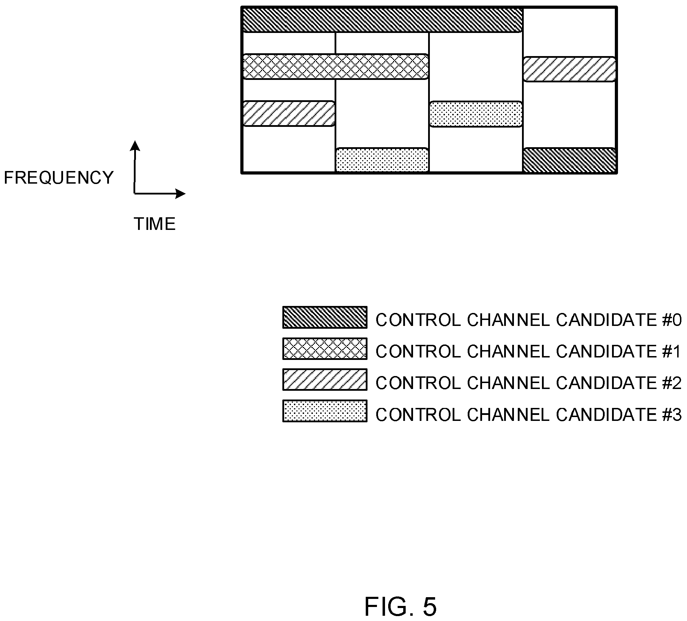

Embodiment 1 will be described below with reference to FIG. 3 to FIG. 5. FIG. 3 illustrates a plurality of control channel candidates in one subframe of radio resources transmitted from a radio base station to a user terminal. FIG. 4 and FIG. 5 illustrate specific examples of allocation of control channel candidates in control channel fields.

As illustrated in FIG. 3, twenty eight symbols (SB #0 to SB #27) are defined in one subframe, and, furthermore, among these twenty eight symbols, the first four symbols (SB #0 to SB #3) are configured so that the four symbols can be used as control channels. For example, referring to the example of FIG. 3, the area surrounded by the bold line is the time/frequency field that can be used as control channels. Note that the width in the vertical axis (frequency axis) direction may be the system bandwidth, or the bandwidth of one component carrier. Note that, in FIG. 3, the number of symbols arranged in one subframe is configured to twenty eight and the number of symbols that can be used for control channels is configured to four, but this is by no means limiting.

Here, control channel symbols SB #0 to SB #3 are configured with (that is, assigned) beams BF #1 to BF #3, respectively. The beams that are configured have their amplitudes and/or phases adjusted, or have directivities, by beamforming. Note that, although the example of FIG. 3 illustrates a case where beams BF #1 to BF #3 all vary, but this is by no means limiting. Beams have only to be configured to vary between at least two symbols among a number of symbols that are used as control channels.

Furthermore, four control channel candidates #0 to #3 are mapped to the field that can be used as control channels. As is apparent from FIG. 3, control channel candidates #0 to #3 are allocated different frequency resources (for example, subcarriers), and, furthermore, mapped over four symbols SB #0 to SB #3.

According to the configuration of embodiment 1, a radio base station can select one of the control channel candidates, and transmit control information using the resource of the selected control channel candidate. Here, assuming that one piece of control information is transmitted, while a number of symbols are used as control channels, at least two symbols are configured so that different beams are assigned (in FIG. 3, different beams are configured in all symbols), different beamforming is applied between symbols, so that a diversity effect (beam diversity gain) can be gained.

Future radio communication systems (for example, 5G, NR, etc.) are expected to realize various radio communication services by fulfilling varying requirements (for example, ultra-high speed, large capacity, ultra-low latency, etc.).

For example, for 5G, research is underway to provide radio communication services, referred to as "eMBB (enhanced Mobile Broad Band)," "IoT (Internet of Things)," "MTC (Machine Type Communication)," "M2M (Machine To Machine)," "URLLC (Ultra Reliable and Low Latency Communications)" and so on. Note that M2M may be referred to as "D2D (Device To Device)," "V2V (Vehicle To Vehicle)," and so on, depending on what communication device is used. To fulfill the requirements for various types of communication such as listed above, studies are in progress to design new communication access schemes (new RATs (Radio Access Technologies)).

For 5G, studies are underway to provide services using a very high carrier frequency of 100 GHz, for example. Generally speaking, it is more difficult to secure coverage when the carrier frequency increases. Reasons for this include that the distance-induced attenuation becomes more severe and makes the rectilinearity of radio waves stronger, the transmission power density decreases because ultra-wideband transmission is performed, and so on.

Therefore, in order to fulfill the requirements for various types of communication such as those mentioned above even in high frequency bands, there are on-going studies to examine the use of massive MIMO (Multiple Input Multiple Output), which uses a very large number of antenna elements. When a very large number of antenna elements are used, beams (antenna directivities) can be formed by adjusting the amplitudes and/or the phases of signals transmitted/received in each element. This process is also referred to as "beamforming (BF)," and makes it possible to reduce the propagation loss of radio waves.

According to embodiment 1 described above, different beamforming is applied between symbols, so that a diversity effect (beam diversity gain) can be gained, and, furthermore, downlink and/or uplink control information can be transmitted using downlink/uplink control signal configurations that are suitable for beamforming.

When the radio base station selects control channel candidates, the radio base station may perform channel estimation by using reference signals based on feedback information from user terminals and/or the reciprocity of channels.

Note that, in FIG. 3, each control channel candidate corresponds to a different subcarrier, and is mapped over the field that can be used as control channels (all of symbols #0 to #3). However, such sample configurations are by no means limiting, and, for example, control channel candidates may be mapped depending on the cell's environment, channel states, and so forth. At this time, the control channel candidates are mapped per CCE (Control Channel Element), which is the unit for allocating control channels.

For example, mapping is possible in the manners illustrated in FIG. 4 and FIG. 5. Assume that, in the examples illustrated in these drawings, the four symbols are all assigned different beams. However, as mentioned above, this is by no means limiting. In FIG. 4, control channel candidate #0 is mapped over all symbols SB #0 to #3, as in FIG. 3.

Meanwhile, control channel candidates #1 to 3 are allocated differently than in the configuration of FIG. 3. Control channel candidate #1 is mapped to symbols SB #0 and #1, in a continuous manner. Control channel candidate #2 is mapped to symbols SB #0 and #3 in a discrete manner. Furthermore, control channel candidate #3 is mapped to different subcarriers in symbols SB #1 and #2. That is, frequency hopping is applied to control channel candidate #3.

In the sample configuration of FIG. 5, control channel candidates #0 and #2 are mapped differently than in the sample configuration of FIG. 4. Although control channel candidate #0 is mapped throughout all of symbols SB #0 to #3 as in FIG. 4, control channel candidate #0 is mapped to the same frequency resource (subcarrier, frequency band, and so forth) only from symbol SB #0 to symbol SB #2, and is allocated, in symbol SB #3, to a frequency resource that is different from that in symbols SB #0 to #2. That is, control channel candidate #0 is not only mapped throughout all the symbols in the field that can be used as control channels, but is also subjected to frequency hopping.

Control channel candidate #2 is mapped to symbols SB #0 and #3, but different frequency bands are allocated respectively. That is, control channel candidate #2 is not only mapped in a discrete manner, but is also subjected to frequency hopping.

According to the examples illustrated in FIG. 4 and FIG. 5, control channel candidates can be mapped in a greater variety of ways, in addition to the configuration illustrated in FIG. 3.

### (Embodiment 2)

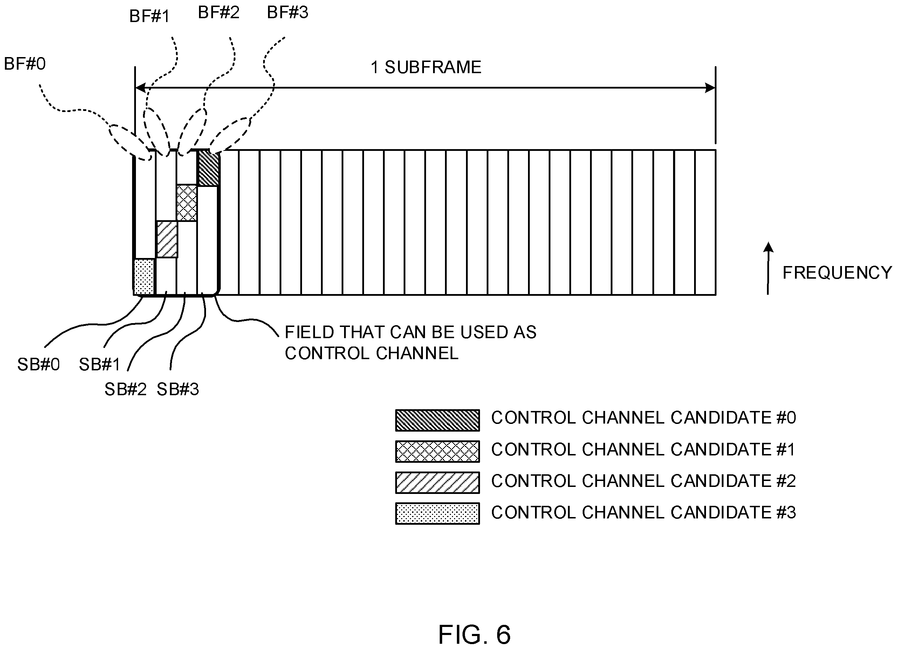

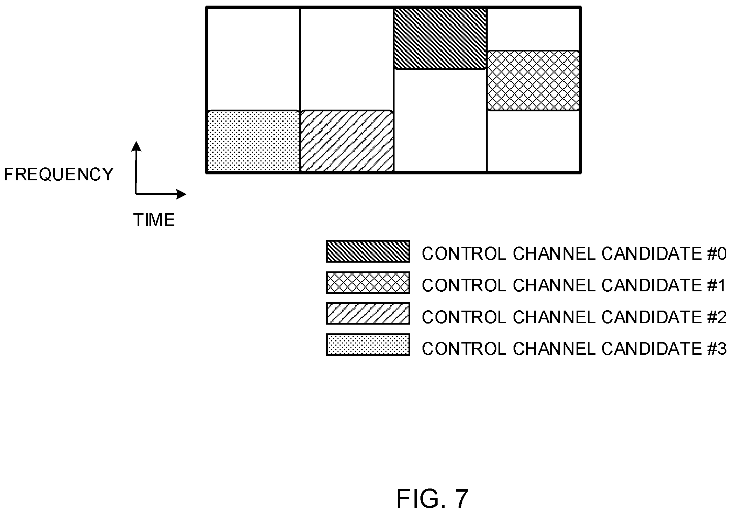

Next, embodiment 2 will be described below with reference to FIG. 6 to FIG. 7. FIG. 6 illustrates a plurality of control channel candidates in one subframe of resources transmitted from a radio base station to a user terminal. FIG. 7 illustrates a specific example of allocation of control channel candidates in a control channel field.

Configurations other than the configuration of mapping of control channel candidates are the same as in embodiment 1 described above. For example, in FIG. 6, the number of symbols in one subframe is twenty eight, the first four symbols are configured so that the four symbols can be used as control channels, and so forth, as in embodiment 1. Also, it is also the same as in embodiment 1 that control channel symbols SB #0 to SB #3 are configured with (that is, assigned) beams BF #1 to BF #3, respectively.

Referring to FIG. 6, control channel candidates #0 to #3 are allocated to different frequencies (subcarriers), and each mapped in one symbol. Control channel candidate #0 is mapped in symbol SB #3, control channel candidate #1 is mapped in symbol SB #2, control channel candidate #2 is mapped in symbol SB #1, and control channel candidate #3 is mapped in symbol SB #0.

According to this configuration of embodiment 2, the radio base station can select one of the control channel candidates, and transmit control information using the resource of the selected control channel candidate. Here, a plurality of control channel candidates are mapped to different symbols, and each symbol is configured with a different beam. Therefore, the radio base station can select optimal beams for transmitting control information when using different beamforming, thereby gaining a beam selection effect.

Also, according to embodiment 2, when an uplink control channel is transmitted in association with a downlink control channel, the uplink control channel is transmitted using the beam that corresponds to the downlink control channel, and, at the base station side, the beam used for transmission is then used for receipt, so that an optimal transmitting/receiving beam can be implemented.

Note that, in the example illustrated in FIG. 6, control channel candidates are all mapped to different frequency bands. However, this is by no means limiting, and the same frequency band may be configured in multiple control channel candidates. In this case, it is only necessary to configure different beams for the symbols that are mapped.

Also, in FIG. 6, different beams are configured for each symbol, but this is by no means limiting. For example, even if the same beam is configured in a number of symbols, it suffices if the channel candidates that are mapped correspond to different frequency bands (for example, different subcarriers). In this case, while it is not possible to implement a beam selection effect between symbols where the same beam is configured, instead, when transmitting control information, it is possible to select frequency resources that are suitable for user terminals.

According to embodiment 2, as in embodiment 1 described above, when the radio base station selects control channel candidates, the radio base station may perform channel estimation by using reference signals based on feedback information from user terminals and/or the reciprocity of channels.

The control channel candidates are mapped per CCE (Control Channel Element), which is the unit for allocating control channels. For example, mapping is possible in the manners illustrated in FIG. 7. Referring to FIG. 7, control channel candidate #0 is mapped to symbol SB #2, and control channel candidate #1 is mapped to symbol SB #3. Control channel candidates #0 and #1 are mapped to different symbols (different beamforming is applied), and allocated to different frequency bands (frequency resources), although overlapping partly. Therefore, when one of control channels #0 and #1 is selected, a beam selection effect can be gained, and, in addition, a frequency selection effect can be gained as well.

Meanwhile, in FIG. 7, control channel candidates #2 and #3 are mapped to symbols SB #0 and #1, respectively. Here, these control channel candidates #2 and #3 use the same frequency resource. By selecting one of control channels #2 and #3, it is possible to gain a beam selection effect within the same frequency band.

According to the example illustrated in FIG. 7, control channel candidates can be mapped in a greater variety of ways, in addition to the configuration illustrated in FIG. 6.

### <Control Signal Configurations in Uplink/Downlink>

Now, configurations of control signals (control information) in the uplink/downlink based on embodiment 2 will be described below with reference to the accompanying drawings.

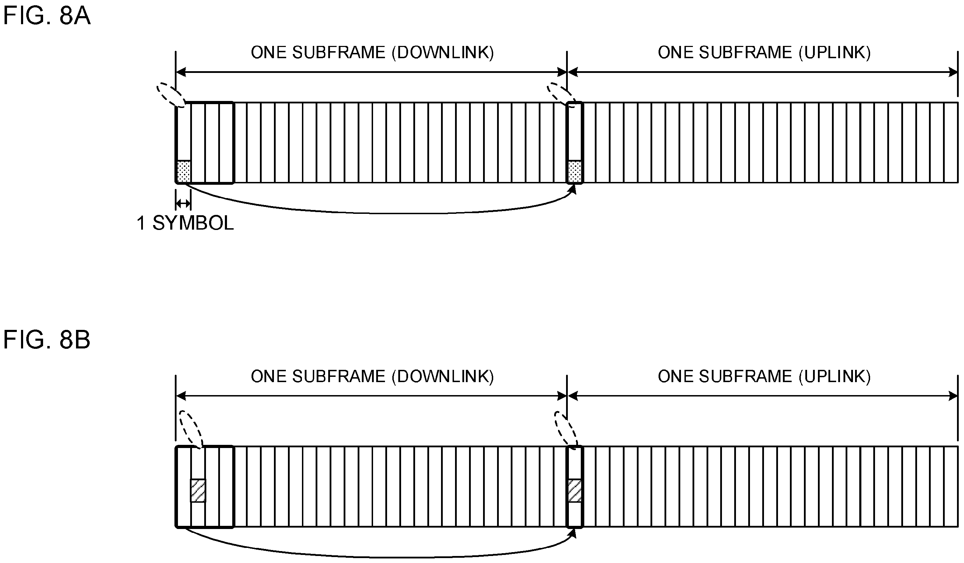

FIGs. 8A and 8B provide diagrams, each illustrating a case in which an uplink control signal is transmitted in association with a downlink control signal. These drawings illustrate that beamforming that corresponds to the beamforming in the downlink is applied to the beamforming in the uplink. As a result, the receiving side (base station side) in the uplink can use the beamforming used for transmission for receipt, on an as-is basis, so that it is possible to provide an optimal transmitting/receiving beam. Note that using the same beamforming on an as-is basis may include using the same codebook, or using the same precoding weight.

### <Method of Reporting Control Channel Field>

Next, the method of reporting control channel fields, which have been explained with above-described embodiments 1 and 2, will be described with reference to the accompanying drawings.

In existing LTE systems, the first one to three symbols in one subframe can be used for control channels. Therefore, even when the use of high frequency bands causes an increase in the number of symbols in one subframe, the number of symbols used as a control channel field may be variable.

This background having been established, how to report the total number of symbols in the control channel fields in above-described embodiments 1 and 2 will be described below with reference to the accompanying drawings. According to this reporting method, the total number of symbols in the control channel field is linked (associated) with the number of symbols per subframe and/or information to represent numerologies, and reported. By this means, a user terminal can learn the total number of symbols in the control channel field in an implicit manner.

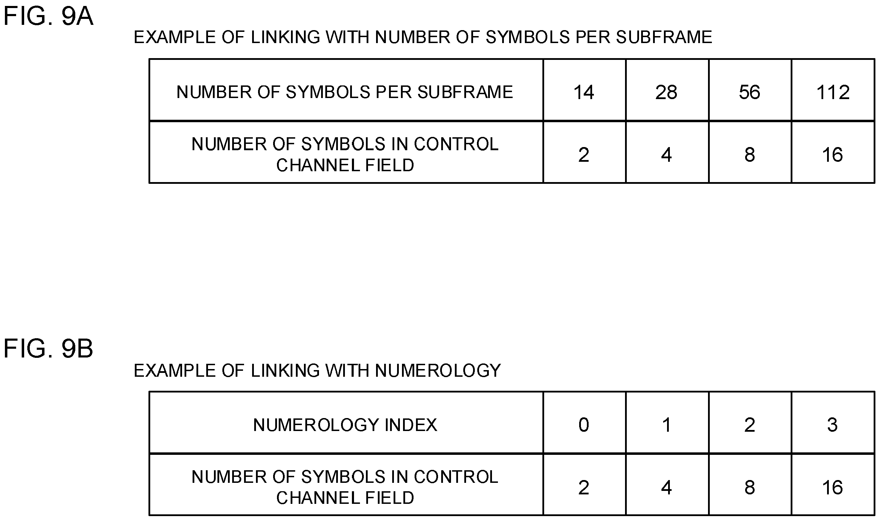

FIG. 9A illustrates an example, in which the number of symbols in the control channel field is linked with the number of symbols per subframe. To be more specific, when the number of symbols per subframe is fourteen, the number of symbols in the control channel field is configured to two. Similarly, if the number of symbols per subframe is twenty eight, fifty six, and one hundred twelve, the number of symbols in the control channel field is configured to four, eight and sixteen, respectively.

FIG. 9B illustrates an example, in which the number of symbols in the control channel field is linked with numerology indices that indicate numerologies. To be more specific, the numbers of symbols in the control channel field -- namely, two, four, eight and sixteen -- are configured with numerology indices zero, one, two and three, respectively.

Now, numerologies will be explained below. In radio access schemes (5G RAT) for future radio communication systems, it is expected that one or more numerologies will be introduced in order to accommodate a wide range of frequency bands and various services with different requirements. Here, a numerology refers to a set of communication parameters (radio parameters) that are defined in the frequency and/or time direction. A set of communication parameters may include at least one of subcarrier spacing, the duration of symbols, the duration of CPs, the length of TTIs, the number of symbols per TTI, the radio frame structure, and so on.

In addition, although the above numerology indices specify different numerologies, and when numerologies are "different," this might mean that, for example, at least one of subcarrier spacing, the duration of symbols, the duration of CPs, the length of TTIs, the number of symbols per TTI, the radio frame structure and so on is different between the numerologies, but this is by no means limiting.

In the above reporting method, to report the number of symbols per subframe, numerology and so on, for example, (1) the method of using higher layer signaling, (2) the method of using MIB, SIB and so on, and (3) the method of linking with carrier frequencies may be used.

According to the above described control channel field reporting method, it is possible to appropriately report the control channel field that is configured in one subframe. The receiving side can detect control channel candidates based on the information that is reported. Also, where there are combinations (information, indicators, and so forth) of the numbers of symbols constituting one subframe and information for specifying numerologies, the total numbers of symbols in the control channel field may be linked (associate) with these.

Also, although, in existing LTE systems, one CCE is configured to be nine REGs, embodiments 1 and 2 may configure the size of one CC anew. It then follows that the numerical values illustrated in FIGs. 9A and 9B are simply examples.

Given that the use of high frequency bands increases the number of symbols in one subframe, there is a possibility that many symbols are used for the control channel field. In this case, the same beamforming may be applied to (the same beam may be configured in) a number of symbols. That is, by applying different beamforming to (by configuring different beams in) at least two symbols, a beam diversity effect can be expected from embodiment 1, and a beam selection effect can be expected from embodiment 2.

### <Method of Transmitting Demodulation Reference Signals>

Next, the method of transmitting demodulation reference signals in the control channel field in embodiments 1 and 2 will be described below with reference to the accompanying drawings.

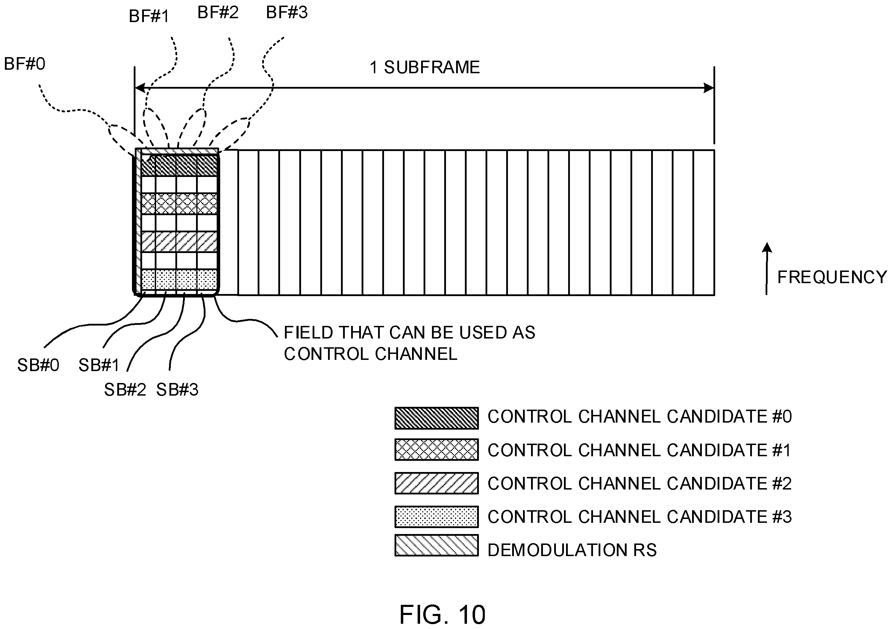

According to embodiment 1, a demodulation reference signal may be multiplexed in a control channel, or may be mapped to a symbol apart from the symbol used for the control channel (for example, a symbol preceding the control channel, a symbol following the control channel, etc.). For example, as illustrated in FIG. 10, demodulation reference signals may be mapped in the shape of the letter T. In this drawing, demodulation reference signals are mapped to symbol SB #0 at the top, spanning a number of control channel candidates along the frequency direction, and then mapped to a frequency resource apart from the control channel candidates, spanning a number of symbols along the time direction.

By means of this configuration, demodulation reference signals corresponding to frequency resources (subcarriers), and demodulation reference signals corresponding to symbols can be provided for control channel candidates, so that demodulation can be performed properly at the receiving side.

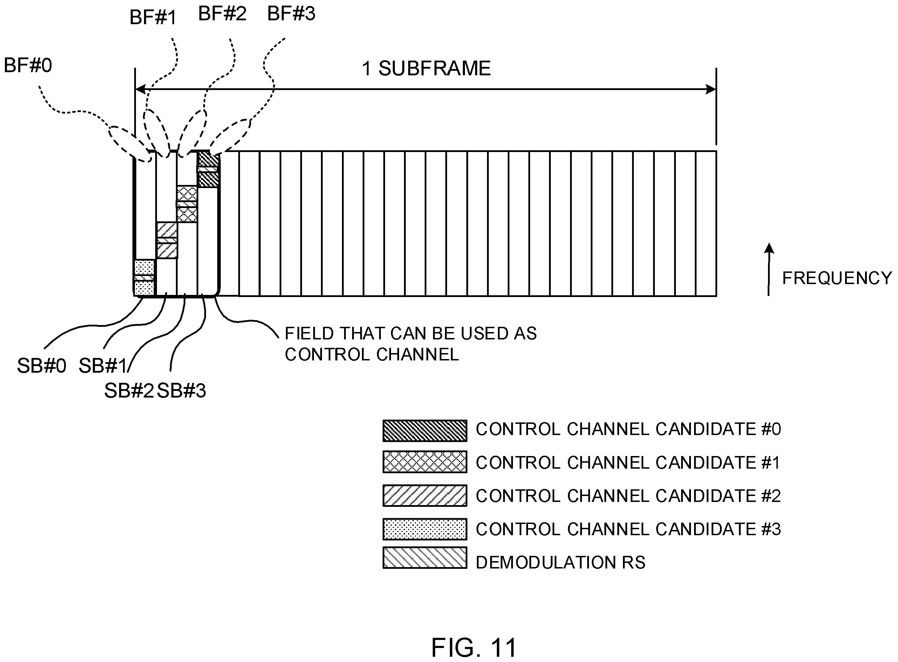

According to embodiment 2, a demodulation reference signal may be multiplexed within the symbol of a control channel candidate, or may be mapped to a symbol apart from the symbol used for the control channel (for example, a symbol preceding the control channel, a symbol following the control channel, etc.). For example, as illustrated in FIG. 11, a demodulation reference signal may be multiplexed with a control channel candidate in each symbol in the control channel field.

By means of this configuration, demodulation reference signals corresponding to frequency resources and symbols can be provided for control channel candidates, so that demodulation can be performed properly at the receiving side.

### <Example of Application of Embodiments 1 and 2>

Next, examples of application of embodiments 1 and 2 will be described below. For example, the configuration of embodiment 1 can be applied to a control channel field that is shared by UEs, such as a UE-common search space (C-SS). Also, the configuration of embodiment 2 can be applied to control channel fields that are UE-specific, such as UE-specific search spaces (UE-SSs).

According to embodiment 1, control information is mapped over symbols to which different beams are assigned, so that UE-common control information can be transmitted to all the UEs in the cell. Also, according to embodiment 2, control information is mapped within one of multiple symbols to which different beams are assigned, so that control information can be transmitted to a specific UE in the cell.

### <Transmission Method in SC Communication>

Next, a case of applying SC communication (DFT-spread OFDM communication) to embodiments 1 and 2 will be described below. In this case, comb (interleaved frequency division multiple access (IFDMA)) may be applied to control channels. In addition, when the control channel field is comprised of a plurality of symbols, frequency hopping may be applied.

### (Radio Communication System)

Now, the structure of a radio communication system according to the present embodiment will be described below. In this radio communication system, the radio communication methods according to the above-described examples are employed. Note that the radio communication methods according to the herein-contained examples of the present invention may be applied individually, or may be applied in combinations.

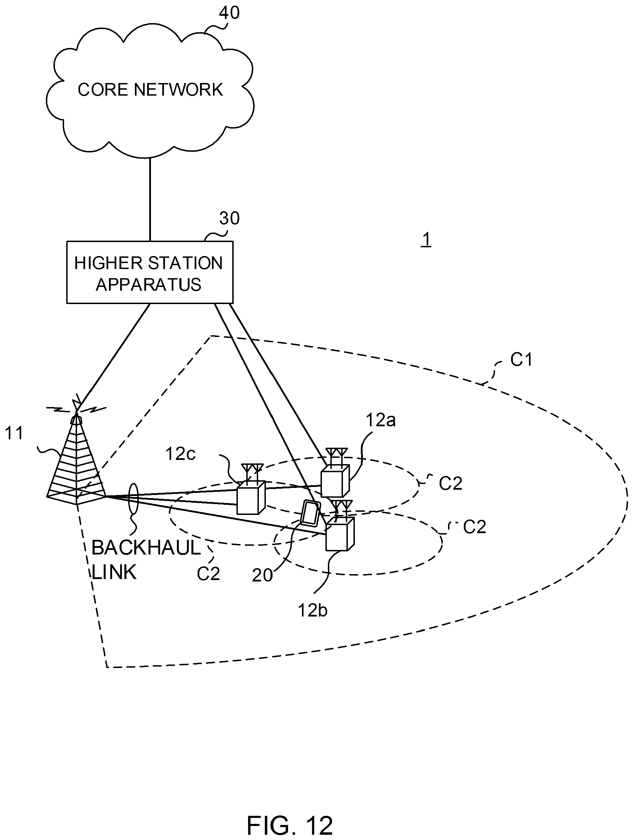

FIG. 12 is a diagram to illustrate an exemplary schematic structure of a radio communication system according to an embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be also referred to as "SUPER 3G," "LTE-A (LTE-Advanced)," "IMT-Advanced," "4G," "5G," "FRA (Future Radio Access)," "NR (New RAT (New Radio Access Technology))" and so on.

The radio communication system 1 illustrated in FIG. 12 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A configuration to apply different numerologies between cells and/or within cells may be adopted here.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use licensed-band CCs and unlicensed-band CCs as a plurality of cells.

Furthermore, the user terminals 20 can communicate by using time division duplexing (TDD) or frequency division duplexing (FDD) in each cell. A TDD cell and an FDD cell may be referred to as a "TDD carrier (frame configuration type 2)," and an "FDD carrier (frame configuration type 1)," respectively.

Furthermore, in each cell (carrier), a single numerology may be employed, or a plurality of different numerologies may be employed.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the configurations of the frequency band for use in each radio base station are by no means limited to these.

A structure may be employed here, in which wire connection (for example, optical fiber, which is in compliance with the CPRI (Common Public Radio Interface), the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmission/reception point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmission/reception points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform device-to-device (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combination of these, and OFDMA may be used in UL.

In the radio communication system 1, a DL shared channel (PDSCH (Physical Downlink Shared CHannel), which is also referred to as, for example, "DL data channel"), which is shared by each user terminal 20, a broadcast channel (PBCH (Physical Broadcast CHannel)), L1/L2 control channels and/or other channels are used as DL channels. User data, higher layer control information, SIBs (System Information Blocks) and so forth are communicated in the PDSCH. Also, the MIB (Master Information Block) is communicated in the PBCH.

The L1/L2 control channels include DL control channels (PDCCH (Physical Downlink Control CHannel), EPDCCH (Enhanced Physical Downlink Control CHannel), PCFICH (Physical Control Format Indicator CHannel), PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. HARQ retransmission command information (ACK/NACK) in response to the PUSCH can be communicated using at least one of the PHICH, the PDCCH and the EPDCCH.

In the radio communication system 1, a UL shared channel (PUSCH (Physical Uplink Shared CHannel), which is also referred to as a "UL data channel" and so on), which is shared by each user terminal 20, a UL control channel (PUCCH (Physical Uplink Control CHannel)), a random access channel (PRACH (Physical Random Access CHannel)) and so on are used as UL channels. User data, higher layer control information and so on are communicated by the PUSCH. Uplink control information (UCI), including at least one of DL signal retransmission control information (A/N), channel state information (CSI) and so on, is communicated in the PUSCH or the PUCCH. By means of the PRACH, random access preambles for establishing connections with cells are communicated.

### (Radio Base Station)

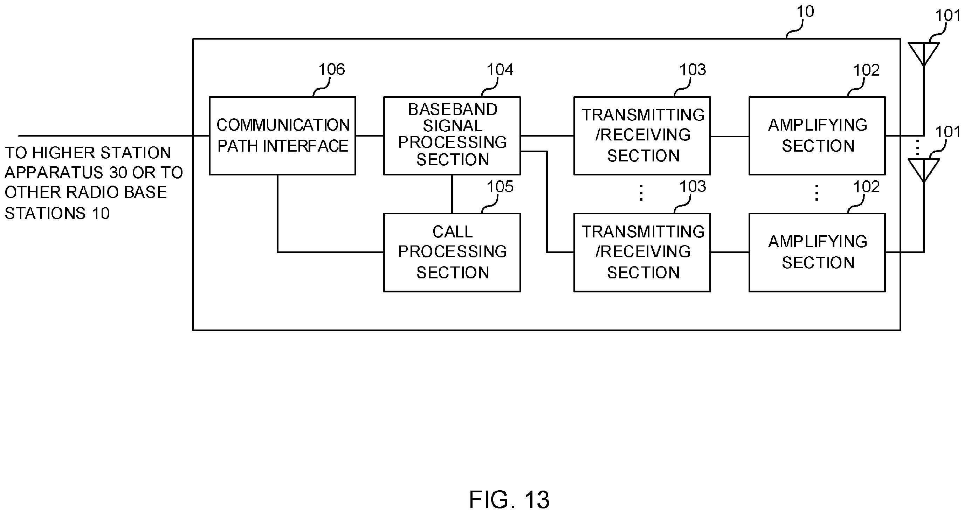

FIG. 13 is a diagram to illustrate an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including, for example, at least one of a PDCP (Packet Data Convergence Protocol) layer process, division and coupling of user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to the transmitting/receiving sections 103. Furthermore, downlink control signals are also subjected to transmission processes such as channel coding and/or an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing of communication channels, manages the state of the radio base station 10 and manages radio resources.

The communication path interface section 106 transmits and receives signals to and from the higher station apparatus 30 via a predetermined interface. Also, the communication path interface 106 may transmit and/or receive signals (backhaul signaling) with neighboring radio base stations 10 via an inter-base station interface (for example, optical fiber, which is in compliance with the CPRI (Common Public Radio Interface), the X2 interface, etc.).

Also, the transmitting/receiving sections 103 transmit selected control channel candidates in the control channel field in one subframe where multiple control channel candidates can be mapped. For example, the transmitting/receiving sections 103 transmits control information by using channels that are selected from the control channel candidates in embodiments 1 and 2 described above.

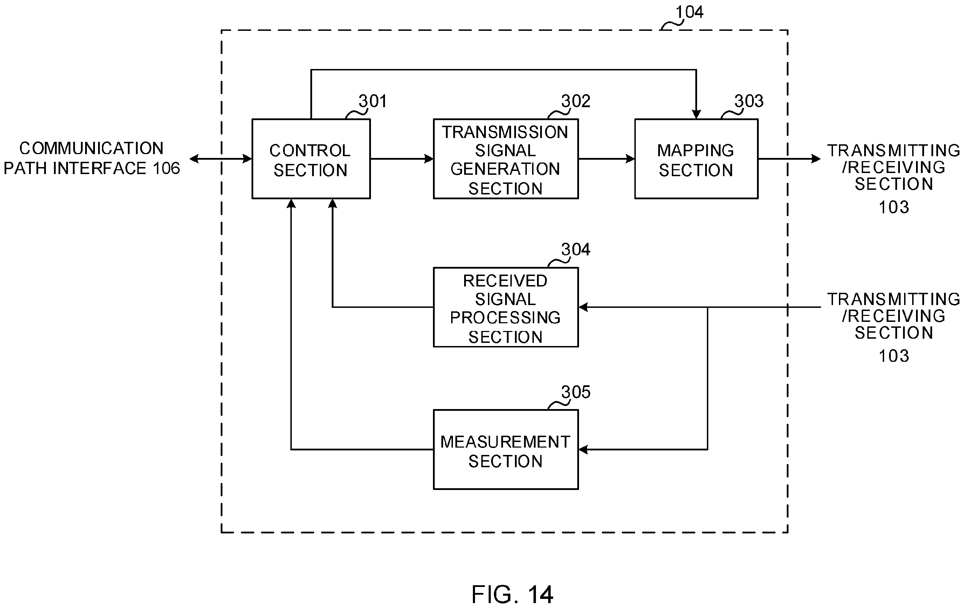

FIG. 14 is a diagram to illustrate an exemplary functional structure of a radio base station according to the present embodiment. Note that, although FIG. 14 primarily illustrates functional blocks that pertain to characteristic parts of the present embodiment, the radio base station 10 has other functional blocks that are necessary for radio communication as well. As illustrated in FIG. 14, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, at least one of generation of DL signals in the transmission signal generation section 302, mapping of DL signals in the mapping section 303, receiving processes (for example, demodulation) for UL signals in the received signal processing section 304, and measurements in the measurement section 305.

To be more specific, the control section 301 schedules user terminals 20. For example, the control section 301 may schedule multiple carriers (DL carriers and/or UL carriers) that use short TTIs of varying lengths. Also, the control section 301 may schedule carriers (DL carriers and/or UL carriers) of normal TTI length.

In addition, the control section 301 may configure a number of carriers (DL carriers and/or UL carriers) that use short TTIs of the same length and/or varying lengths, in user terminals 20. These carriers may be configured using at least one of higher layer signaling, system information, and L1/L2 control channels.

In addition, the control section 301 selects optimal control channel candidates for transmitting control information from the control channel candidates of embodiments 1 and 2 described above, based on results of channel estimation using feedback information and/or reference signals from the user terminals, the reciprocity of channels, and so on. The control section 301 exerts control so that the control information is mapped to the selected control channel candidates.

The control section 301 also exerts control so that control channel candidates are mapped over different symbols, or mapped to only one symbol.

Furthermore, the control section 301 exerts control so that at least one of the number of symbols that constitute one subframe and information for specifying numerologies is reported to a user terminal, so that the user terminal can specify the number of symbols constituting the control channel field based on this information or the number of symbols.

Also, when a control channel candidate is mapped over different symbols, the control section 301 exerts control so that the control channel candidate is mapped based on the predetermined number of CCEs (Control Channel Elements) allocated to each symbol. Also, when a control channel candidate is mapped to only one symbol, the control section 301 exerts control so that the control channel candidate is mapped based on the number of control channel candidates in the symbol, which is determined in advance.

In addition, the control section 301 exerts control so that demodulation reference signals are mapped to frequency resources and time resources of the symbols where the control channel candidates are mapped in the control channel field.

The control section 301 can be constituted by a controller, a control circuit or control apparatus that can be described based on general understanding of the technical field to which the present invention pertains.

The transmission signal generation section 302 generates DL signals (including DL data, scheduling information, short TTI configuration information and so on) as commanded by the control section 301, and outputs these signals to the mapping section 303.

The transmission signal generation section 302 can be constituted by a signal generator, a signal generation circuit or signal generation apparatus that can be described based on general understanding of the technical field to which the present invention pertains.

The mapping section 303 maps the DL signals generated in the transmission signal generation section 302 to predetermined radio resources as commanded by the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) for UL signals transmitted from the user terminals 20 (including, for example, UL data signals, UL control signals, UL reference signals, UCI, short TTI support information and so forth). To be more specific, the received signal processing section 304 performs UL signal receiving processes based on the numerologies configured in the user terminals 20. To be more specific, the received signal processing section 304 may output the received signals and/or the signals after receiving processes to the measurement section 305. In addition, the received signal processing section 304 performs receiving processes for A/Ns that arrive in response to DL signals, and outputs ACKs or NACKs to the control section 301.

The measurement section 305 conducts measurements with respect to the received signals. The measurement section 305 can be constituted by a measurer, a measurement circuit or measurement apparatus that can be described based on general understanding of the technical field to which the present invention pertains.

The measurement section 305 may measure the channel quality of the UL based on, for example, the received power (for example, RSRP (Reference Signal Received Power)) and/or the received quality (for example, RSRQ (Reference Signal Received Quality)) of UL reference signals. The measurement results may be output to the control section 301.

### (User Terminal)

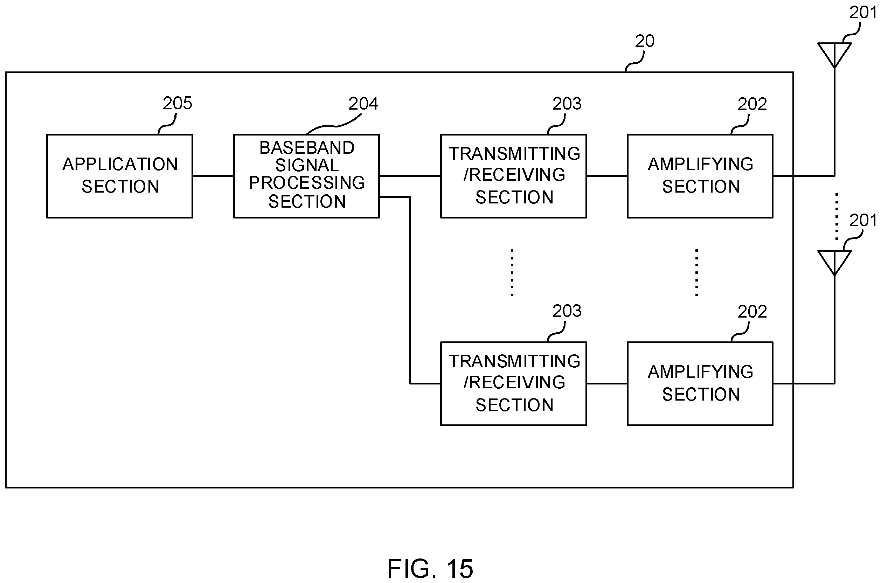

FIG. 15 is a diagram to illustrate an exemplary overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the DL signals amplified in the amplifying sections 202. The received signals are subjected to frequency conversion and converted into the baseband signal in the transmitting/receiving sections 203, and output to the baseband signal processing section 204.

The baseband signal processing section 204 performs receiving processes for the baseband signal that is input, including at least one of an FFT process, error correction decoding, a retransmission control receiving process and so on. DL data is forwarded to the application section 205. The application section 205 performs processes related to higher layers above the physical layer and the MAC layer, and/or other processes. Also, the broadcast information is also forwarded to application section 205.

Meanwhile, UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (for example, DL retransmission control information, channel state information, etc.) is also subjected to channel encoding, rate matching, puncturing, DFT process, IFFT process and so on, and forwarded to each transmitting/receiving section 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Also, the transmitting/receiving sections 203 receive control channel candidates in the control channel field in one subframe where multiple control channel candidates can be mapped. In the control channel field, different beams are associated with different symbols, and the above control channel candidates are mapped to at least one of the above different symbols.

The transmitting/receiving sections 203 can be constituted by transmitters/receivers, transmitting/receiving circuits or transmitting/receiving apparatus that can be described based on general understanding of the technical field to which the present invention pertains. Furthermore, a transmitting/receiving section 203 may be structured as one transmitting/receiving section, or may be formed with a transmitting section and a receiving section.

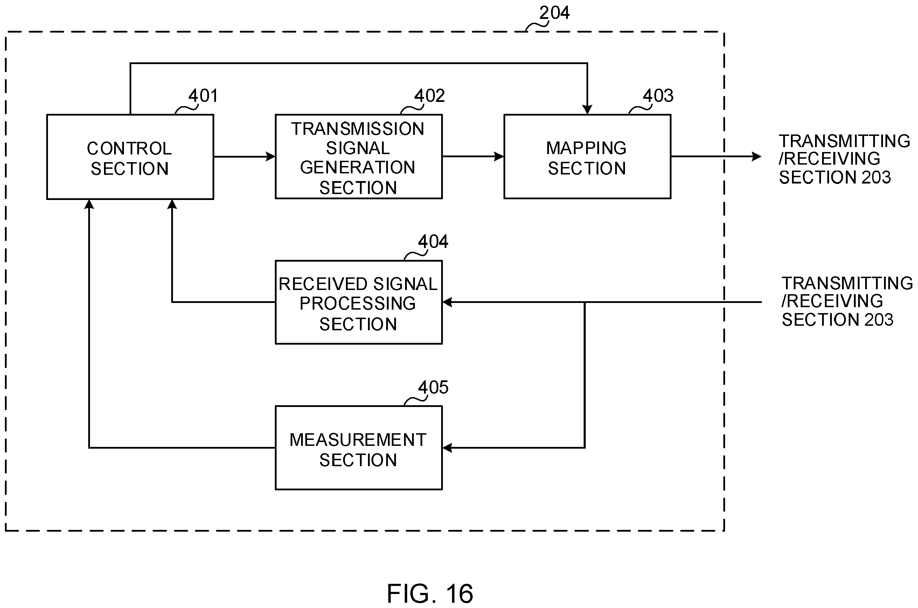

FIG. 16 is a diagram to illustrate an exemplary functional structure of a user terminal according to the present embodiment. Note that, although FIG. 16 primarily illustrates functional blocks that pertain to characteristic parts of the present embodiment, the user terminal 20 has other functional blocks that are necessary for radio communication as well. As illustrated in FIG. 16, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, at least one of generation of UL signals in the transmission signal generation section 402, mapping of UL signals in the mapping section 403, receiving processes for DL signals in the received signal processing section 404 and measurements in the measurement section 405.

In addition, the control section 401 exerts control so that control information is decoded based on control channel candidates that are received. In the control channel field, different beams are associated with different symbols, and the above control channel candidates are mapped to at least one of the above different symbols.

Also, a control channel candidate is mapped to a number of symbols among the different symbols, or mapped to one of the different symbols.

The control section 401 exerts control so that the number of symbols that constitute the above control channel field is specified by using at least one of the number of symbols that constitute one subframe and information for specifying numerologies, and the above control information is decoded based on this number of symbols.

Also, in the above control channel field, reference signals are mapped to frequency resources and time resources of the symbols where the control channel candidates are mapped. The control section 401 may exert control so that control information is decoded using these reference signals.

The control section 401 can be constituted by a controller, a control circuit or control apparatus that can be described based on general understanding of the technical field to which the present invention pertains.

In the transmission signal generation section 402, UL signals (including UL data signals, UL control signals, UL reference signals, UCI, short TTI support information, etc.) are generated (through, for example, encoding, rate matching, puncturing, modulation and so on) as commanded by the control section 401, and output to the mapping section 403. The transmission signal generation section 402 can be constituted by a signal generator, a signal generation circuit or signal generation apparatus that can be described based on general understanding of the technical field to which the present invention pertains.

The mapping section 403 maps the UL signals generated in the transmission signal generation section 402 to predetermined radio resources, as commanded by the control section 301, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) for DL signals (including DL data signals, scheduling information, DL control signals, DL reference signals, short TTI configuration information and so forth). The received signal processing section 404 outputs the information received from the radio base station 10, to the control section 401. The received signal processing section 404 outputs, for example, broadcast information, system information, higher layer control information related to higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that the channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### (Hardware Structure)

Note that the block diagrams that have been used to describe the above embodiment illustrate blocks in functional units. These functional blocks (components) may be implemented in arbitrary combinations of hardware and/or software. Also, means for implementing each functional block is not particularly limited. That is, each functional block may be realized by one piece of apparatus that is physically and/or logically aggregated, or may be realized by connecting two or more physically and/or logically separate pieces of apparatus directly and/or indirectly (by using cables and/or by radio) and using these multiple pieces of apparatus.

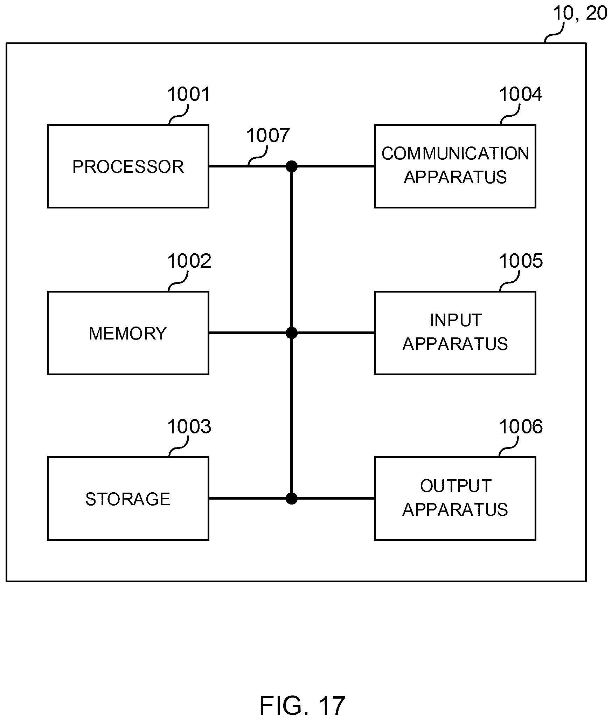

That is, a radio base station, a user terminal and so on according to an embodiment of the present invention may function as a computer that executes the processes of the radio communication method of the present invention. FIG. 17 is a diagram to illustrate an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus illustrated in the drawings, or may be designed not to include part of the apparatus.

For example, although only one processor 1001 is illustrated, a plurality of processors may be provided. Furthermore, processes may be implemented with one processor, or processes may be implemented in sequence, or in different manners, on one or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and the like for implementing the radio communication methods according to one embodiment of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary from apparatus to apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or multiple slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frame, a subframe, a slot and a symbol may be each called by other applicable names. For example, one subframe may be referred to as a "transmission time interval (TTI)," or a plurality of consecutive subframes may be referred to as a "TTI," or one slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this. The TTI may be the transmission time unit for channel-encoded data packets (transport blocks), code blocks and/or codewords, or may be the unit of processing in scheduling, link adaptation and so on.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," a "shortened subframe," a "short subframe," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI long. One TTI and one subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource field of one subcarrier and one symbol.

Note that the structures of radio frames, subframes, slots, symbols and so on described above are simply examples. For example, configurations such as the number of subframes included in a radio frame, the number of slots included in a subframe, the number of symbols and RBs included in a slot, the number of subcarriers included in an RB, the number of symbols in a TTI, the duration of symbols, the length of cyclic prefixes (CPs) and so on can be changed in a variety of ways.

Also, the information, parameters and so forth described in this specification may be represented in absolute values or in relative values with respect to predetermined values, or may be represented using other applicable information. For example, radio resources may be specified by predetermined indices. In addition, equations to use these parameters and so on may be used, apart from those explicitly disclosed in this specification.

The names used for parameters and/or others in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and/or received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each example/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are by no means limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication systems and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access." As used herein, when two elements are connected, these elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency range, the microwave range and/or the optical (both visible and invisible) range.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-192333, filed on September 29, 2016, including the specification, drawings and abstract, is incorporated herein by reference in its entirety.

## Claims

1. A user terminal comprising:
a receiving section that receives a control channel candidate in a control channel field where a plurality of control channel candidates are able to be mapped in one subframe; and
a control section that exerts control to decode control information based on the control channel candidate received in the receiving section,
wherein, in the control channel field, different beams are associated with different symbols, and the control channel candidate is mapped to at least one of the different symbols.

2. The user terminal according to claim 1, wherein the control channel candidate is mapped to a plurality of symbols among the different symbols or mapped to one of the different symbols.

3. The user terminal according to claim 1 or 2, wherein the control section exerts control to specify a number of symbols that constitute the control channel field based on at least one of a number of symbols constituting the one subframe and information for specifying a numerology, and to decode the control information based on the number of symbols constituting the control channel field.

4. The user terminal according to any one of claims 1 to 3, wherein, in the control channel field, a reference signal is mapped corresponding to a frequency resource and a time resource of a symbol where the control channel candidate is mapped.

5. The user terminal according to claim 4, wherein the control section exerts control to decode the control information using the reference signal.

6. A radio communication method for a user terminal, comprising:
receiving a control channel candidate in a control channel field where a plurality of control channel candidates are able to be mapped in one subframe; and
exerting control to decode control information based on the control channel candidate received,
wherein, in the control channel field, different beams are associated with different symbols, and the control channel candidate is mapped to at least one of the different symbols.
